# EUROPÄISCHE PATENTSCHRIFT

(11) **EP 1 632 308 B1**
(45) Veröffentlichungstag und Bekanntmachung des Hinweises auf die Patenterteilung: **09.01.2008**
(21) Anmeldenummer: 04405549.9
(22) Anmeldetag: 03.09.2004
(51) Int. Cl.: B23Q 1/01, B23Q 3/18, B23Q 1/58

(54) **Linearbewegungsführung mit zwei parallelen Führungsschienen und Verfahren zu deren Herstellung**
Linear guide with two parallel guide rails and method for producing it
Guidage linéaire avec deux rails de guidage parallèles et procédé pour sa fabrication

(43) Veröffentlichungstag der Anmeldung: 08.03.2006
(73) Patentinhaber: Schneeberger Holding AG, 4914 Roggwil (CH)
(72) Erfinder: Schneeberger, Hans-Martin, 4900 Langenthal (CH); Mischler, Ernst, 4914 Roggwil (CH); Schaller, Aldo, 4562 Biberist (CH); Wehrli, Ivan, 4934 Madiswil (CH)
(74) Vertreter: EGLI-EUROPEAN PATENT ATTORNEYS

(56) Entgegenhaltungen:
- DE-A- 19 961 869
- US-A- 5 706 581

## Beschreibung

Die Erfindung betrifft eine Linearbewegungsführung mit zumindest zwei Führungsschienen und jeweils zumindest einem sich an den Führungsschienen abstützenden und entlang einer Längsbewegungsachse der Führung bewegbaren Schlitten. Weiterhin betrifft die Erfindung ein Verfahren zum Herstellen einer Linearbewegungsführung (siehe, z.B., DE-19961869-A).

In einer weit verbreiteten Linearbewegungsführung stützt sich ein Schlitten über in mindestens einer Umlaufeinheit angeordneten Roll- oder Wälzelemente an der Führungsschiene ab. Der Schlitten ist aufgrund einer Rotation der Wälzkörper in der Umlaufeinheit an der Schiene entlang einer Längsbewegungsachse bewegt. Die Erfindung erfasst jedoch nicht nur derartige Linearwälzlagerführungen sondern beispielsweise auch solche, bei denen sich der Schlitten über Gleit-, Fluid- oder magnetische Lagerung auf der Schiene abstützt.

Linearbewegungsführungen werden vor allem zur translatorischen, insbesondere geradlinigen, Bewegung und Führung von Maschinenteilen eingesetzt, wie dies beispielsweise bei der Bewegung der translatorischen Achsen einer Werkzeugmaschine erforderlich ist. Obwohl die Linearführungen oftmals in einer stark verschmutzten Umgebung und bei ungünstigen Bedingungen, wie beispielsweise hohen Temperaturen, eingesetzt werden, wird von ihnen eine hohe Präzision gefordert. Eine Voraussetzung für die Gewährleistung einer hohen Präzision der Bewegung der Maschinenteile ist die Sicherstellung einer grossen Steifheit der Führung. Die Führung sollte sich deshalb aufgrund von Belastungen möglichst nicht verlagern oder verformen. Ebenso sollte die Eigenfrequenz des Maschinenteils, das sich aus einem Träger und der daran befestigten Linearbewegungsführung ergibt, möglichst hoch in einem unschädlichen Bereich mit kleiner Schwingamplitude liegen. Eine weitere wesentliche Voraussetzung für eine präzise Bewegung der Maschinenteile ist, dass die Wälzelemente des Schlittens nicht verschmutzen, da dies auf den Verschleiss und die Führungsgenauigkeit einen nachteiligen Einfluss hat.

Die Führungsschienen sind zur möglichst sicheren und steifen Befestigung an einem Träger meistens mit orthogonal zu ihrer Oberfläche verlaufenden Durchgangsbohrungen versehen, die zur Aufnahme von Befestigungselementen, wie beispielsweise Schrauben, vorgesehen sind.

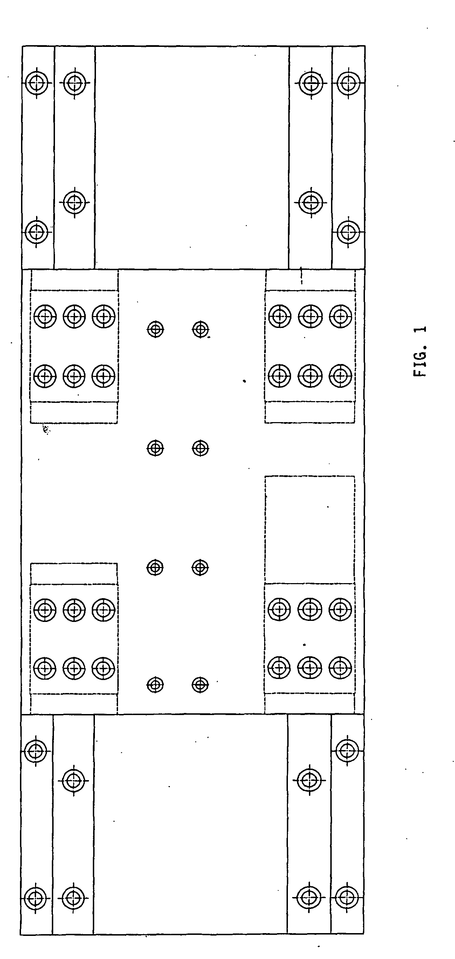

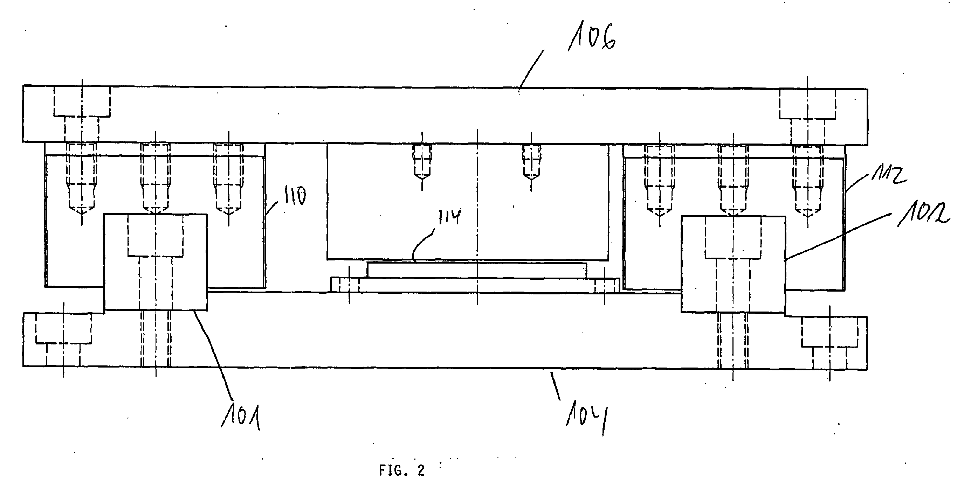

In einer speziellen Anwendung solcher Linearbewegungsführungen werden zwei Schienen nebeneinander vorgesehen, die einen festen Abstand voneinander haben und auf die dann jeweils zwei Schlitten aufgesetzt werden, um ein Linearbewegungssystem auszubilden. Nach der EP-A-1 060 829 wird dabei z.B. vorgeschlagen, Anschlagkanten an den Führungsschienen vorzusehen, die Führungsschienen auf Platten etc. justiert zu befestigen, die Schlitten auf die Führungsschienen zu setzen und bestimmte Flächen der Führungsschienen und der Schlitten als Justierflächen des Gesamtsystems zu verwenden. Eine solche Ausführung gemäss dem Stand der Technik ist in den Figuren 1 und 2 dargestellt, bei der die Führungsschienen 101 und 102 auf einer untere Platte 104 aufgeschraubt sind. Die obere Platte 106 ist dann auf die Schlitten 110 und 112 aufgeschraubt. Ein Linearmotor 114 dient dabei zum Antrieb des Linearbewegungssystems. Gemäss dem hier zitierten Stand der Technik ist es durchaus möglich, in dieser Ausführung Anschlagflächen der Führungsschienen als Einjustierflächen zu verwenden und nicht etwa z.B. die untere Platte 104.

Es hat sich dabei aber herausgestellt, dass diese Anordnung einen hohen Fertigungsaufwand erfordert und damit fertigungstechnische Redundanz schafft. Die originären Anschlagflächen sind nämlich an den Führungsschienen angebracht, die Auflageflächen aber an der Untermontage, so dass hier quasi eine zweistufige Referenznahme notwendig ist.

Der Erfindung liegt deshalb die Aufgabe zugrunde, eine gattungsgemässe Linearbewegungsführung zu schaffen und ein Verfahren zu dessen Herstellung vorzuschlagen, so dass der Fertigungsaufwand verringert wird, ohne die Anforderungen an die Justierbarkeit des Gesamtsystems zu verringern.

Diese Aufgabe wird bei einer Linearbewegungsführung der eingangs erwähnten Art durch die Massnahmen nach Anspruch 1 gelöst. Dabei haben die Massnahmen der Erfindung zunächst einmal zur Folge, dass Anschlagflächen an den beiden Führungsschienen weiterhin die Justierflächen für das Gesamtsystem darstellen. In einer bevorzugten Ausführung der Erfindung stellen auch die Oberflächen der Schlitten obere Justierflächen zur Verfügung. Die Genauigkeit der Linearbewegungsführung wird in einer bevorzugten Ausführungsform durch die hochgenauen Einschweissungen mit Hilfe von Lehren sichergestellt. In einer ebenso vorgeschlagenen, alternativen Ausführung der Erfindung ist vorgesehen, dass die Verbindung - vorzugsweise ebenfalls mit einer Lehre - durch Einkleben vorgenommen wird. Die Genauigkeit des Einbaus wird aber durch Anschlagflächen an den Führungsschienen bzw. der Schlitten gewährleistet und muss nicht durch entsprechende Flächen an den Abstandsplatten abgetragen werden.

Weitere bevorzugte Ausgestaltungen der Erfindung ergeben sich aus den abhängigen Ansprüchen. Diese bevorzugten Ausgestaltungen beinhalten bezüglich der Weiterentwicklung teilweise durchaus eigene erfinderische Weiterentwicklungen, ohne aber vom erfinderischen Grundgedanken wegzuführen.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung und ein dazugehöriger Verfahrensablauf zur vorliegenden Erfindung erläutert wird.

Die Erfindung wird hier auf der Grundlage eines Linearbewegungssystems beschrieben, bei der die Abstandsplatten zunächst einmal zwischen den Führungsschienen eingeschweisst, eingeklebt oder auf eine äquivalente Weise verbunden sind. Es wird dem Fachmann klar sein oder er ist hierdurch darauf hinzuweisen, dass die Erfindung erweitert nicht nur in einer Weise ausgeführt werden kann, dass die Abstandsplatten sowohl zwischen den Führungsschienen als auch zwischen den Schlitten angeordnet werden, wobei jegliche Kombination der Verbindungsmethode eingeschlossen ist, sondern auch indem solche Abstandsplatten nur zwischen den Schlitten angeordnet werden.

Weiterhin wird es dem Fachmann klar sein oder er ist hierdurch darauf hinzuweisen, dass für die Erfindung in der hier vorliegenden Beschreibung der Vorgang des Einschweissens einerseits sehr konkret gemeint ist, aber andererseits dieser Vorgang stellvertretend für andere, grundsätzlich austauschbare Arbeitsgänge steht.

In der Zeichnung zeigen:
- Fig. 1: eine Draufsicht auf eine zwei Führungsschienen und zwei Schlitten aufweisendes Linearführungssystem gemäss dem Stand der Technik;
- Fig. 2: eine Seitenansicht des zwei Führungsschienen und zwei Schlitten aufweisenden Linearführungssystems gemäss dem Stand der Technik nach Figur 1;
- Fig. 3: eine Draufsicht auf ein zwei Führungsschienen und zwei Schlitten aufweisendes Linearführungssystem gemäss einer ersten Ausführungsform der vorliegenden Erfindung;
- Fig. 4: eine Seitenansicht des zwei Führungsschienen und zwei Schlitten aufweisenden Linearführungssystem gemäss der Ausführungsform der vorliegenden Erfindung nach Figur 3;
- Fig. 5: eine perspektivische Ansicht des zwei Führungsschienen und zwei Schlitten aufweisendes Linearführungssystem gemäss der Ausführungsform der vorliegenden Erfindung nach Figur 3;
- Fig. 6: eine Draufsicht auf eine zwei Führungsschienen und zwei Schlitten aufweisendes Linearführungssystem gemäss einer zweiten Ausführungsform der vorliegenden Erfindung;

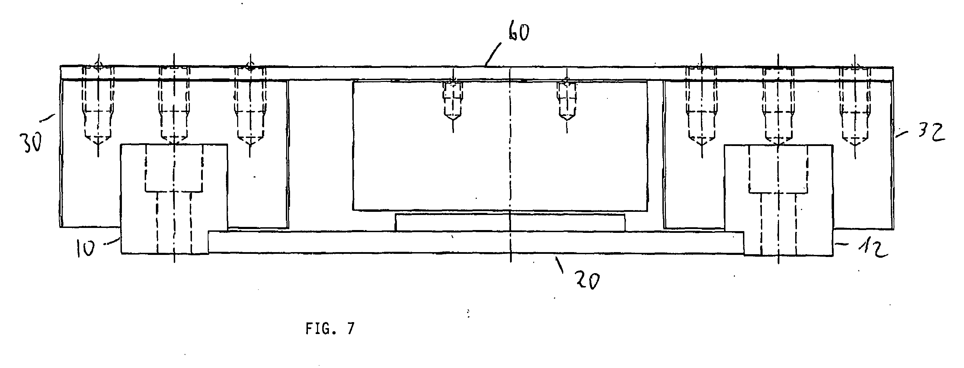

- Fig. 7: eine Seitenansicht des zwei Führungsschienen und zwei Schlitten aufweisenden Linearführungssystems gemäss einer weiteren Ausführungsform der vorliegenden Erfindung.

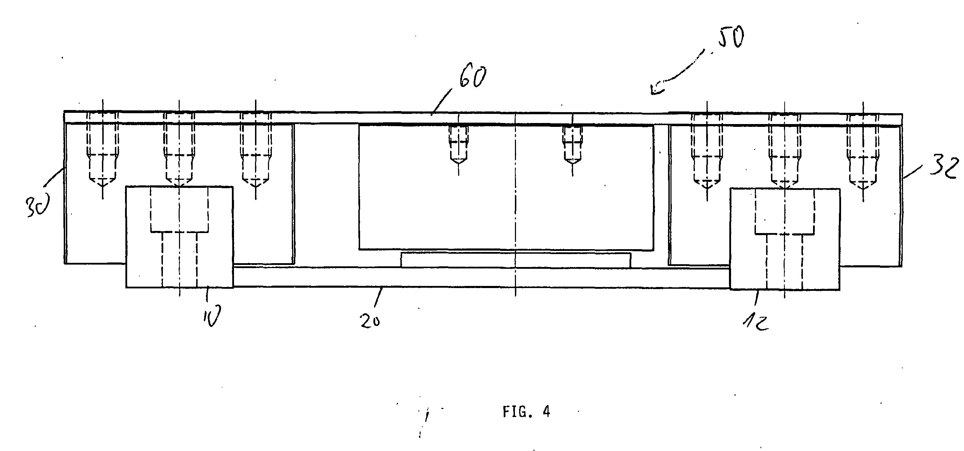

In der in Figur 4 als Ganzes mit 50 bezeichneten Linearbewegungsvorrichtung sind zwei Führungsschienen 10 und 12 der vorbekannten Art vorgesehen. Zwischen diesen Führungsschienen ist eine Abstandsplatte 20 eingeschweisst. Der Einschweissvorgang wird im vorliegenden Ausführungsbeispiel so ausgeführt, dass die Schweissung mit Hilfe einer Schweisslehre durchgeführt wird, in die zwei Führungsschienen zur Definition eines vorbestimmten Abstandes eingebracht werden. Die untere Abstandsplatte 20 wird dann durch Laserschweissen eingeschweisst. Die Schweissung wird als Linienschweissung jeweils über Abschnitte von ca. 20 bis 50 mm durchgeführt. Eine solche Schweissnaht wird von beiden Seiten - also oben und unten - durchgeführt. Es hat sich nämlich gezeigt, dass eine einzelne Schweissnaht - also nur oben oder nur unten - nicht zur erforderlichen Stabilität führt. Es ist besonders vorteilhaft und wird daher in dem hier beschriebenen Ausführungsbeispiel auch ausgeführt, dass die untere Abstandsplatte vor dem Einschweissen an der Oberseite angefast ist. Dadurch kann die Schweissnaht praktisch in die Anfasung der Platte versenkt werden. Ebenso sind die Führungsschienen jeweils auf der der unteren Abstandsplatte zugewandten Seite angefast, wodurch dann die untere Schweissnaht ebenso versenkt werden kann. Um den Führungsschienen weiterhin die Eigenschaft zu erhalten, eine Unterseite des Linearbewegungssystems zu behalten, ist die Unterseite der unteren Abstandsplatte beim Einschweissen so angeordnet, dass sie nach dem Einschweissen oberhalb der Unterseite der Führungsschienen verbleibt.

Sodann werden vier Schlitten 30 und 32 auf die Führungsschienen 10 und 12 aufgesetzt, die Schlitten 30 und 32 werden mit einer weiteren Lehre arretiert und dann wird in einem zweiten Schritt eine obere Abstandsplatte 60 durch Laserschweissen eingeschweisst. Auch diese Schweissung wird als Linienschweissung jeweils über einen Abschnitt durchgeführt. Die Linienschweissung wird dabei wiederum von beiden Seiten der Schweissnaht jeweils zwischen den Führungsschienen und der oberen Abstandsplatte ausgeführt. Im vorliegenden Ausführungsbeispiel ist auch die obere Abstandsplatte vor dem Einschweissen an der Seite angefast. Auch die Aussenkanten der Schlitten sind jeweils auf der der oberen Abstandsplatte zugewandten Seite angefast. Um auch den Schlitten die Eigenschaft zu erhalten, eine Oberseite des Linearbewegungssystems auszubilden, ist auch die Oberseite der oberen Abstandsplatte beim Einschweissen so angeordnet, dass sie nach dem Einschweissen unterhalb der Oberseiten der Schlitten verbleibt.

Im vorstehend beschriebenen Ausführungsbeispiel ist der Antrieb als Linearantrieb an den beiden Abstandsplatten 20 und 60 angebracht. Alternativ kann der Antrieb aber auch auf jede bereits für solche Linearantriebe bekannte Weise ausgebildet sein.

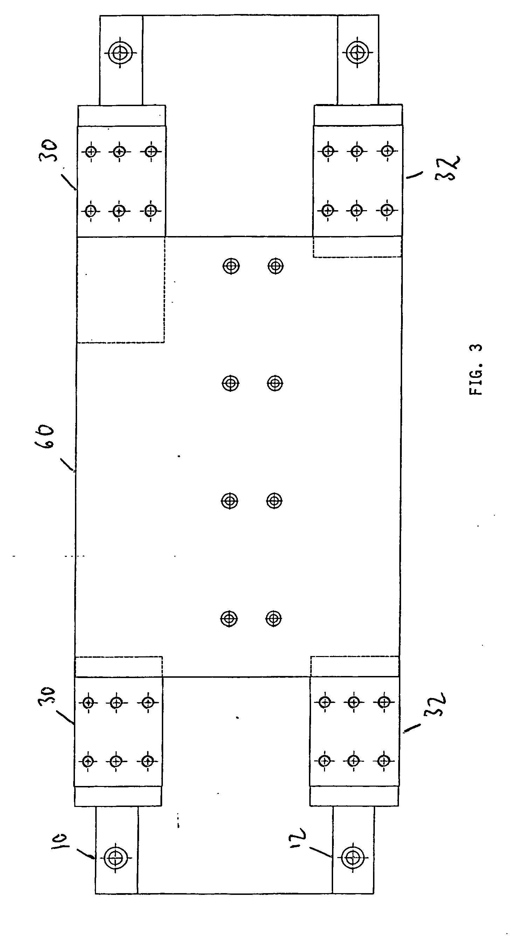

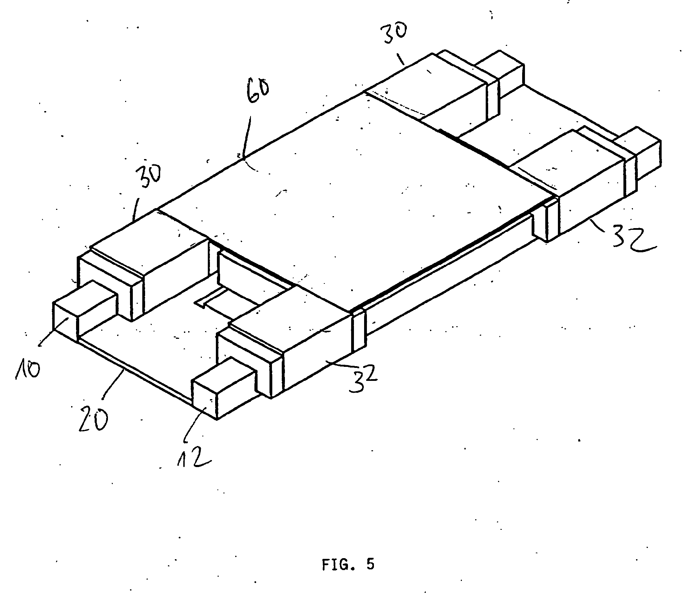

In dem in den Figuren 3 bis 5 abgebildeten Linearbewegungssystem ist die obere Abstandsplatte in etwa rechteckig ausgebildet. Ausgehend von ihren Ecken werden zwei Schweissnähte an der Frontseite von zwei Schlitten und zwei Schweissnähte an der Rückseite von zwei weiteren Schlitten ausgeführt. In dieser Ausführung ist die obere Abstandsplatte also zwischen den Schlitten angeordnet.

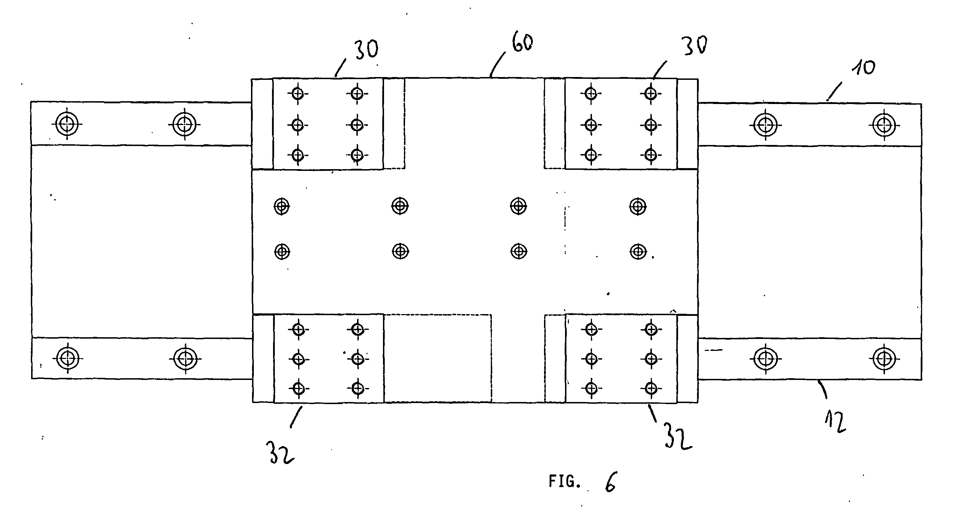

In einem alternativen Ausführungsbeispiel gemäss Figur 6 ist die obere Abstandsplatte in etwa rechteckig mit vier rechteckigen Ausschnitten an ihren Ecken ausgebildet. Die Schlitten werden dann an den Positionen der Ausschnitte eingeschweisst. Dies hat die Eigenschaft, dass die Schweissnähte so insgesamt länger ausgebildet sein können, was zu einer höheren Festigkeit führen kann.

In einem weiteren Ausführungsbeispiel der Erfindung ist die untere Abstandsplatte nicht eingeschweisst, sondern eingeklebt. Da es bei den bestehenden Verhältnissen vorteilhaft ist, eine bestimmte Klebefläche vorzufinden, sind in diesem Fall die Führungsschienen auf den inneren, unteren Seiten mit einem Ausschnitt oder einer Nut versehen. Es wird für den Fachmann evident sein, dass diese Ausführungsform mit einer Nut oder einem Ausschnitt - allenfalls auch in Kombination mit dem Anfasen gemäss der oben stehenden Beschreibung - auch bei dem zuerst beschriebenen Ausführungsbeispiel mit den eingeschweissten Abstandsplatten einsetzbar ist.

## Patentansprüche

1. Linearbewegungsführung mit zumindest zwei Führungsschienen (10, 12) und zumindest jeweils einem sich an jeder der Führungsschienen (10, 12) abstützenden und entlang einer Längsbewegungsachse der Führung bewegbaren Schlitten (30, 32), bei welcher die Führungsschienen (10, 12) zur Anordnung an einem Träger mittels Befestigungsmitteln vorgesehen sind,
**dadurch gekennzeichnet, dass**
- zwischen die zumindest zwei Führungsschienen (10, 12) eine untere Abstandsplatte (20) eingeschweisst, eingeklebt oder auf eine andere Weise fest angeordnet ist, wobei die untere Abstandsplatte (20) im Verhältnis zu den Führungsschienen (10, 12) deren Abstand festlegt.

2. Linearbewegungsführung nach Anspruch 1, **dadurch gekennzeichnet, dass** die untere Abstandsplatte (20) eingeschweisst ist und zumindest eine Schweissnaht der unteren Abstandsplatte (20) in einer Anfasung der unteren Abstandplatte (20) angeordnet ist.

3. Linearbewegungsführung nach einem der Ansprüche 1 oder 2, **dadurch gekennzeichnet, dass** zumindest eine Schweissnaht der unteren Abstandsplatte (20) in einer Anfasung der Führungsschienen (10, 12) angeordnet ist.

4. Linearbewegungsführung nach einem der Ansprüche 1 bis 3, **dadurch gekennzeichnet, dass** die Unterseite der unteren Abstandsplatte (20) nach dem Einschweissen oberhalb der Unterseite der Führungsschienen (10, 12) verbleibt.

5. Linearbewegungsführung nach Anspruch 1, **dadurch gekennzeichnet, dass** die untere Abstandsplatte (20) eingeklebt ist, wobei die Führungsschienen (10, 12) jeweils eine Nut aufweisen, in oder an der die untere Abstandsplatte (20) jeweils eingeklebt ist.

6. Linearbewegungsführung nach einem der vorstehenden Ansprüche, **dadurch gekennzeichnet, dass**
- zwischen den Schlitten (30, 32) eine obere Abstandsplatte (60) eingeschweisst, eingeklebt oder auf eine andere Weise fest angeordnet ist, wobei die obere Abstandsplatte (60) im Verhältnis zu den Schlitten (30, 32) deren Abstand festlegt.

7. Linearbewegungsführung nach Anspruch 6, **dadurch gekennzeichnet, dass** die obere Abstandsplatte (60) eingeschweisst ist und zumindest eine Schweissnaht der oberen Abstandsplatte (60) in einer Anfasung der oberen Abstandplatte (60) angeordnet ist.

8. Linearbewegungsführung nach einem der Ansprüche 6 oder 7, **dadurch gekennzeichnet, dass** zumindest eine Schweissnaht der oberen Abstandsplatte (60) in einer Anfasung der Schlitten (30, 32) angeordnet ist.

9. Linearbewegungsführung nach einem der Ansprüche 6 bis 8, **dadurch gekennzeichnet, dass** die Oberseite der oberen Abstandsplatte (60) nach dem Einschweissen unterhalb der Oberseiten der Schlitten (30, 32) verbleibt.

10. Linearbewegungsführung nach einem der Ansprüche 6 bis 9, **dadurch gekennzeichnet, dass** die obere Abstandsplatte (60) in etwa rechteckig ausgebildet ist und dass sie ausgehend von ihren Ecken an der Frontseite von zwei Schlitten (30) und an der Rückseite von zwei weiteren Schlitten (32) angeschweisst ist.

11. Linearbewegungsführung nach einem der Ansprüche 6 bis 10, **dadurch gekennzeichnet, dass** die obere Abstandsplatte (60) in etwa rechteckig mit vier rechteckigen Ausschnitten an ihren Ecken ausgebildet ist und die Schlitten (30, 32) an den Positionen der Ausschnitte eingeschweisst sind.

12. Linearbewegungsführung nach Anspruch 6, **dadurch gekennzeichnet, dass** die obere Abstandsplatte (60) eingeklebt ist, wobei die Schlitten (30, 32) jeweils eine Nut oder einen Ausschnitt aufweisen, in oder an der die obere Abstandsplatte (60) jeweils eingeklebt ist.

13. Verfahren zur Herstellung einer Linearbewegungsführung mit zumindest zwei Führungsschienen (10, 12) und zumindest jeweils einem sich an jeder der Führungsschienen (10, 12) abstützenden und entlang einer Längsbewegungsachse der Führung bewegbaren Schlitten (30, 32), bei welcher die Führungsschienen (10, 12) zur Anordnung an einem Träger mittels Befestigungsmitteln vorgesehen sind,
**dadurch gekennzeichnet, dass**
- zwischen die zumindest zwei Führungsschienen (10, 12) eine untere Abstandsplatte (20) eingeschweisst, eingeklebt oder auf eine andere Weise fest angeordnet wird, die im Verhältnis zu den Führungsschienen (10, 12) deren Abstand festlegt.

14. Verfahren zur Herstellung einer Linearbewegungsführung nach Anspruch 13, **dadurch gekennzeichnet, dass** eine Schweissung mittels einer Schweisslehre durchgeführt wird, in die zwei Führungsschienen (10, 12) zur Definition eines vorbestimmten Abstandes eingebracht werden und dass die untere Abstandsplatte (20) durch Laserschweissen eingeschweisst wird.

15. Verfahren nach Anspruch 14, **dadurch gekennzeichnet, dass** die Schweissung im ersten Schritt als Linienschweissung jeweils über einen Abschnitt durchgeführt wird, wobei die Linienschweissung von beiden Seiten der Schweissnaht jeweils zwischen den Führungsschienen (10, 12) und der unteren Abstandsplatte (20) durchgeführt wird.

16. Verfahren nach einem der Ansprüche 14 oder 15, **dadurch gekennzeichnet, dass** die untere Abstandsplatte (20) vor dem Einschweissen zumindest an der Oberseite angefast ist.

17. Verfahren nach einem der Ansprüche 14 bis 16, **dadurch gekennzeichnet, dass** die Führungsschienen (10, 12) jeweils zumindest auf der der unteren Abstandsplatte (20) zugewandten Seite angefast sind.

18. Verfahren nach einem der Ansprüche 14 bis 17, **dadurch gekennzeichnet, dass** die Unterseite der unteren Abstandsplatte (20) beim Einschweissen so angeordnet ist, dass sie nach dem Einschweissen oberhalb der Unterseite der Führungsschienen (10, 12) verbleibt.

19. Verfahren nach Anspruch 13, **dadurch gekennzeichnet, dass** die untere Abstandsplatte (20) eingeklebt ist, wobei die Führungsschienen (10, 12) jeweils eine Nut oder einen Ausschnitt aufweisen, in oder an der die untere Abstandsplatte (20) jeweils ein- oder angeklebt ist.

20. Verfahren zur Herstellung einer Linearbewegungsführung nach einem der Ansprüche 13 bis 19, **dadurch gekennzeichnet, dass** in einem zweiten Schritt zwischen den Schlitten (30, 32) eine obere Abstandsplatte (60) eingeschweisst, eingeklebt oder auf eine andere Weise fest angeordnet wird, wobei die obere Abstandsplatte (60) im Verhältnis zu den Schlitten (30, 32) deren Abstand festlegt.

21. Verfahren nach Anspruch 20, **dadurch gekennzeichnet, dass** in dem genannten zweiten Schritt eine Schweissung mittels einer Schweisslehre durchgeführt wird, in die zumindest zwei Schlitten (30, 32) zur Definition eines vorbestimmten Abstandes eingebracht werden und dass die obere Abstandsplatte (60) durch Laserschweissen eingeschweisst wird.

22. Verfahren nach einem der Anspruche 21, **dadurch gekennzeichnet, dass** die Schweissung im zweiten Schritt als Linienschweissung jeweils über einen Abschnitt durchgeführt wird, wobei die Linienschweissung von beiden Seiten der Schweissnaht jeweils zwischen den Schlitten und der oberen Abstandsplatte (60) durchgeführt wird.

23. Verfahren nach einem der Ansprüche 21 oder 22, **dadurch gekennzeichnet, dass** die obere Abstandsplatte (60) vor dem Einschweissen zumindest an der Seite angefast ist.

24. Verfahren nach einem der Ansprüche 21 bis 23, **dadurch gekennzeichnet, dass** die Oberseite der oberen Abstandsplatte (60) beim Einschweissen so angeordnet ist, dass sie nach dem Einschweissen unterhalb der Oberseiten der Schlitten (30, 32) verbleibt.

25. Verfahren nach einem der Ansprüche 21 bis 24, **dadurch gekennzeichnet, dass** die obere Abstandsplatte in etwa rechteckig ausgebildet ist und dass ausgehend von ihren Ecken zwei Schweissnähte an der Frontseite von zwei Schlitten (30, 32) und zwei Schweissnähte an der Rückseite von zwei weiteren Schlitten (30, 32) ausgeführt werden.

26. Verfahren nach einem der Ansprüche 21 bis 25, **dadurch gekennzeichnet, dass** die obere Abstandsplatte (60) in etwa rechteckig mit vier rechteckigen Ausschnitten an ihren Ecken ausgebildet ist und die Schlitten (30, 32) an den Positionen der Ausschnitte eingeschweisst werden.

## Claims

1. Linear motion guide with at least two guide rails (10, 12) and in each case at least one sled (30, 32) that is supported on each of the guide rails (10, 12) and can be moved along a longitudinal motion axis of the guide, in which the guide rails (10, 12) are envisaged for arrangement on a carrier by way of fastening means,
**characterised in that**
between the at least two guide rails (10, 12) a lower distance plate (20) is welded in, glued in or firmly attached in another manner, whereby in relation to the guide rails (10, 12) the lower distance plate (20) determines the distance between them.

2. Linear motion guide in accordance with claim 1, **characterised in that** the lower distance plate (20) is welded in and at least one welding seam of the lower distance plate (20) is arranged in a chamfer of the lower distance plate (20).

3. Linear motion guide in accordance with any one of claims 1 or 2, **characterised in that** at least one welding seam of the lower distance plate (20) is arranged in a chamfer of the guide rails (10, 12).

4. Linear motion guide in accordance with any one of claims 1 to 3, **characterised in that** the lower side of the lower distance plate (20) remains above the underside of the guide rails (10, 12) after welding in.

5. Linear motion guide in accordance with claim 1, **characterised in that** the lower distance plate (20) is glued in, whereby the guide rails (10, 12) each have a groove into or to which the lower distance plate (20) is glued.

6. Linear motion guide in accordance with the above claims, **characterised in that**
an upper distance place (60) is welded, glued or firmly arranged in another manner between the sleds (30, 32), whereby in relation to the sleds (30, 32) the upper distance plate (60) determines the distances between them.

7. Linear motion guide in accordance with claim 6, **characterised in that** the upper distance plate (60) is welded in and at least one welding seam of the upper distance plate (60) is arranged in a chamfer of the upper distance plate (60).

8. Linear motion guide in accordance with any one of claims 6 or 7, **characterised in that** at least one welding seam of the upper distance plate (60) is arranged in a chamfer of the sleds (30, 32).

9. Linear motion guide in accordance with any one of claims 6 to 8, **characterised in that** the upper side of the upper distance plate (60) remain below the upper sides of the sleds (30, 32) after welding in.

10. Linear motion guide in accordance with any one of claims 6 to 9, **characterised in that** the upper distance plate (60) is approximately rectangular and **in that** starting from its corners it is welded onto the front side of two sleds (30) and on the rear side of two further sleds (32).

11. Linear motion guide in accordance with any one of claims 6 to 10, **characterised in that** the upper distance plate (60) is approximately rectangular with four rectangular cut-outs at its corners and the sleds (30, 32) are welded at the positions of the cut-outs.

12. Linear motion guide in accordance with claim 6, **characterised in that** the upper distance plate (60) is glued in, whereby the sleds (30, 32) each have a groove or cut-out into or at which the upper distance plate is glued.

13. Method of manufacturing a linear motion guide with at least two guide rails (10, 12) and at least one sled (30, 32) supported on each of the guide rails (10, 12) and movable along a longitudinal motion axis of the guide, in which the guide rails (10, 12) are envisaged for arrangement on a carrier by way of fastening means,
**characterised in that**
between the at least two guide rails (10, 12) a lower distance plate (20) is welded, glued or firmly attached in another manner which in relation to the guide rails (10, 12) determines the distance between them.

14. Method for manufacturing a linear motion guide in accordance with claim 13, **characterised in that** welding is carried out using a welding template into which the two guide rails (10, 12) are introduced to define a predetermined distance and **in that** the lower distance plate (20) is welded in by way of laser welding.

15. Method in accordance with claim 14, **characterised in that** the welding in the first step is carried out over one section at a time as linear welding, whereby the linear welding is carried out from both sides of the welding seam in each case between the guide rails (10, 12) and the lower distance plate (20).

16. Method in accordance with any one of claims 14 or 15, **characterised in that** the lower distance plate (20) is chamfered on at least the upper side before welding.

17. Method in accordance with any one of claims 14 to 16, **characterised in that** the guide rails (10, 12) are each chamfered at least on the side facing the lower distance plate (20).

18. Method in accordance with any one of claims 14 to 17, **characterised in that** the lower side of the lower distance plate (20) is arranged during welding so that after welding it remains above the underside of the guide rails (10, 12).

19. Method in accordance with claim 13, **characterised in that** the lower distance plate (20) is glued in whereby the guide rails (10, 12) each have a groove or cut-out into or to which the lower distance plates (20) is glued.

20. Method of manufacturing a linear motion guide in accordance with any one of claims 13 to 19, **characterised in that** in a second step an upper distance plate (60) is welded, glued or firmly attached in another manner between the sleds (30, 32), whereby in relation to the sleds the upper distance plate (60) defines the distance between them.

21. Method in accordance with claim 20, **characterised in that** said second step welding is carried out with the aid of welding template, into which the at least two guide rails (30, 32) are introduced and **in that** the upper distance plate (60) is welded in by way of laser welding.

22. Method in accordance with one of claims 21, **characterised in that** the welding in the second step is carried out over a section as linear welding, whereby the linear welding is carried out from both sides of the welding seam between the sleds and the upper distance plate (60).

23. Method in accordance with any one of claims 21 or 22, **characterised in that** the upper distance plate (60) is chamfered on at least one side before welding in.

24. Method in accordance with any one of claims 21 to 23, **characterised in that** the upper side of the upper distance plate (60) is arranged during welding so that after welding it remains above the upper sides of the sleds (30, 32).

25. Method in accordance with any one of claims 21 to 24, **characterised in that** the upper distance plate is approximately rectangular and that starting from its corners two welding seams are produced on the front side of two sleds (30, 32) and two welding seams on the rear side of two further sleds (30, 32).

26. Method in accordance with any one of claims 21 to 25, **characterised in that** the upper distance plate (60) is approximately rectangular with four rectangular cut-outs at its corners and the sleds (30, 32) are welded in at the cut-out positions.

## Revendications

1. Guide de déplacement linéaire comprenant au moins deux rails de guidage (10, 12) et au moins respectivement un coulisseau (30, 32) s'appuyant sur chacun des rails de guidage (10, 12) et pouvant être déplacé le long d'un axe de déplacement longitudinal du guide, sur lequel les rails de guidage (10, 12) sont prévus pour l'agencement sur un support à l'aide de moyens de fixation,
**caractérisé en ce que**
- une plaque d'espacement (20) inférieure est soudée, collée ou disposée de façon fixe d'une autre façon entre les au moins deux rails de guidage (10, 12), la plaque d'espacement (20) inférieure déterminant sa distance par rapport aux rails de guidage (10, 12).

2. Guide de déplacement linéaire selon la revendication 1, **caractérisé en ce que** la plaque d'espacement (20) inférieure est soudée à l'intérieur et **en ce qu'**au moins un cordon de soudure de la plaque d'espacement (20) inférieure est disposée dans un chanfrein de la plaque d'espacement (20) inférieure.

3. Guide de déplacement linéaire selon l'une quelconque des revendications 1 ou 2, **caractérisé en ce qu'**au moins un cordon de soudure de la plaque d'espacement (20) inférieure est disposé dans un chanfrein des rails de guidage (10, 12).

4. Guide de déplacement linéaire selon l'une quelconque des revendications 1 à 3, **caractérisé en ce que** le côté inférieur de la plaque d'espacement (20) inférieure reste après le soudage au-dessus du côté inférieur des rails de guidage (10, 12).

5. Guide de déplacement linéaire selon la revendication 1, **caractérisé en ce que** la plaque d'espacement (20) inférieure est collée à l'intérieur, les rails de guidage (10, 12) présentant chacun une rainure dans laquelle ou sur laquelle la plaque d'espacement (20) inférieure est respectivement collée.

6. Guide de déplacement linéaire selon l'une quelconque des revendications précédentes, **caractérisé en ce que**
- une plaque d'espacement (60) supérieure est soudée, collée ou disposée d'une autre façon entre les coulisseaux (30, 32), la plaque d'espacement (60) supérieure définissant sa distance par rapport aux coulisseaux (30, 32).

7. Guide de déplacement linéaire selon la revendication 6, **caractérisé en ce que** la plaque d'espacement (60) supérieure est soudée à l'intérieur et **en ce qu'**au moins un cordon de soudure de la plaque d'espacement (60) supérieure est disposé dans un chanfrein de la plaque d'espacement (60) supérieure.

8. Guide de déplacement linéaire selon l'une quelconque des revendications 6 ou 7, **caractérisé en ce qu'**au moins un cordon de soudure de la plaque d'espacement (60) supérieure est disposée dans un chanfrein des coulisseaux (30, 32).

9. Guide de déplacement linéaire selon l'une quelconque des revendications 6 à 8, **caractérisé en ce que** le côté supérieur de la plaque d'espacement (60) supérieure reste après le soudage au-dessous des côtés supérieurs des coulisseaux (30, 32).

10. Guide de déplacement linéaire selon l'une quelconque des revendications 6 à 9, **caractérisé en ce que** la plaque d'espacement (60) supérieure est réalisée à peu près de façon rectangulaire et **en ce qu'**elle est rapportée par soudage à partir de ses angles sur le côté avant de deux coulisseaux (30) et sur le côté arrière de deux autres coulisseaux (32).

11. Guide de déplacement linéaire selon l'une quelconque des revendications 6 à 10, **caractérisé en ce que** la plaque d'espacement (60) supérieure est conçue à peu près rectangulaire avec quatre découpes rectangulaires sur ses angles et les coulisseaux (30, 32) sont soudés à l'intérieur sur des positions des découpes.

12. Guide de déplacement linéaire selon la revendication 6, **caractérisé en ce que** la plaque d'espacement (60) supérieure est collée à l'intérieur, les coulisseaux (30, 32) présentant chacun une rainure ou une découpe dans ou sur laquelle la plaque d'espacement (60) supérieure est respectivement collée.

13. Procédé pour la fabrication d'un guide de déplacement linéaire avec au moins deux rails de guidage (10, 12) et au moins respectivement un coulisseau (30, 32) s'appuyant sur chacun des rails de guidage (10, 12) et pouvant être déplacé le long d'un axe de déplacement longitudinal du guide, sur lequel les rails de guidage (10, 12) sont prévus pour la disposition sur un support à l'aide de moyens de fixation,
**caractérisé en ce que**
- une plaque d'espacement (20) inférieure est soudée, collée ou disposée de façon fixe d'une autre manière entre les au moins deux rails de guidage (10, 12), laquelle définit sa distance par rapport aux rails de guidage (10, 12).

14. Procédé pour la fabrication d'un guide de déplacement linéaire selon la revendication 13, **caractérisé en ce qu'**un soudage est effectué au moyen d'un gabarit de soudage, dans lequel deux rails de guidage (10, 12) sont introduits pour définir une distance prédéfinie et **en ce que** la plaque d'espacement (20) inférieure est soudée par soudage au laser.

15. Procédé selon la revendication 14, **caractérisé en ce que** le soudage est effectué dans la première étape sous la forme de soudage en ligne respectivement au moyen d'une partie, le soudage en ligne étant effectué par les deux côtés du cordon de soudure respectivement entre les rails de guidage (10, 12) et la plaque d'espacement (20) inférieure.

16. Procédé selon l'une quelconque des revendications 14 ou 15, **caractérisé en ce que** la plaque d'espacement (20) inférieure est chanfreinée avant le soudage au moins sur le côté supérieur.

17. Procédé selon l'une quelconque des revendications 14 à 16, **caractérisé en ce que** les rails de guidage (10, 12) sont chanfreinés respectivement au moins sur le côté tourné vers la plaque d'espacement (20) inférieure.

18. Procédé selon l'une quelconque des revendications 14 à 17, **caractérisé en ce que** le côté inférieur de la plaque d'espacement (20) inférieure est disposé lors du soudage de telle sorte qu'il reste après le soudage au-dessus du côté inférieur des rails de guidage (10, 12).

19. Procédé selon la revendication 13, **caractérisé en ce que** la plaque d'espacement (20) inférieure est collée, les rails de guidage (10, 12) présentant respectivement une rainure ou une découpe dans ou sur laquelle la plaque d'espacement (20) inférieure est respectivement collée dedans ou dessus.

20. Procédé pour la fabrication d'un guide de déplacement linéaire selon l'une quelconque des revendications 13 à 19, **caractérisé en ce que**, dans une seconde étape, une plaque d'espacement (60) supérieure est soudée, collée ou disposée de façon fixe d'une autre manière entre les coulisseaux (30, 32), la plaque d'espacement (60) supérieure définissant sa distance par rapport aux coulisseaux (30, 32).

21. Procédé selon la revendication 20, **caractérisé en ce que**, lors de la seconde étape mentionnée, on effectue un soudage au moyen d'un gabarit de soudage, dans lequel au moins deux coulisseaux (30, 32) sont introduits pour définir une distance prédéfinie et **en ce que** la plaque d'espacement (60) supérieure est soudée par soudage au laser.

22. Procédé selon l'une quelconque des revendications 21, **caractérisé en ce que** le soudage est effectué lors de la seconde étape sous la forme de soudage en ligne respectivement au moyen d'une partie, le soudage en ligne étant effectué à partir des deux côtés du cordon de soudage respectivement entre les coulisseaux et la plaque d'espacement (60) supérieure.

23. Procédé selon l'une quelconque des revendications 21 ou 22, **caractérisé en ce que** la plaque d'espacement (60) supérieure est chanfreinée avant le soudage au moins sur le côté.

24. Procédé selon l'une quelconque des revendications 21 à 23, **caractérisé en ce que** le côté supérieur de la plaque d'espacement (60) supérieure est disposé lors du soudage de sorte qu'elle reste après le soudage au-dessous des côtés supérieurs des coulisseaux (30, 32).

25. Procédé selon l'une quelconque des revendications 21 à 24, **caractérisé en ce que** la plaque d'espacement (60) supérieure est conçue à peu près rectangulaire et **en ce que**, à partir de leurs angles, deux cordons de soudure sont réalisés sur le côté avant de deux coulisseaux (30, 32) et deux cordons de soudure sur le côté arrière de deux autres coulisseaux (30, 32).

26. Procédé selon l'une quelconque des revendications 21 à 25, **caractérisé en ce que** la plaque d'espacement (60) supérieure est à peu près rectangulaire avec quatre découpes rectangulaires sur leurs angles et les coulisseaux (30, 32) sont soudés sur les positions des découpes.
